# EUROPÄISCHE PATENTSCHRIFT

(11) **EP 3 304 231 B1**
(45) Veröffentlichungstag und Bekanntmachung des Hinweises auf die Patenterteilung: **23.12.2020**
(21) Anmeldenummer: 16727347.3
(22) Anmeldetag: 25.05.2016
(51) Int. Cl.: G05B 23/02, B66B 5/00

(54) **ÜBERWACHEN EINER FÖRDERANLAGE**
MONITORING A CONVEYOR SYSTEM
SURVEILLANCE D'UNE INSTALLATION DE CONVOYAGE

(30) Priorität: 02.06.2015 EP 15170254
(43) Veröffentlichungstag der Anmeldung: 11.04.2018
(73) Patentinhaber: Inventio AG, 6052 Hergiswil (CH)
(72) Erfinder: DE ANGELIS, Claudio, 48161 Münster (DE)
(86) Internationale Anmeldenummer: PCT/EP2016/061732
(87) Internationale Veröffentlichungsnummer: WO 2016/193077

(56) Entgegenhaltungen:
- EP-A1- 1 050 503
- US-A1- 2003 217 894
- US-A1- 2010 094 798
- US-A1- 2011 240 414

## Beschreibung

Die Erfindung betrifft ein Verfahren zur Überwachung einer Förderanlage, also zum Beispiel einer Aufzugsanlage, einer Fahrtreppe, eines Fahrsteigs oder dergleichen, wobei im Interesse einer besseren Lesbarkeit der nachfolgenden Beschreibung der Begriff Förderanlage im Folgenden als Oberbegriff zumindest für eine Aufzugsanlage, eine Fahrtreppe oder einen Fahrsteig verwendet wird und entsprechend solche speziellen Förderanlagen stets mitzulesen sind. Die Erfindung betrifft des Weiteren eine im Folgenden auch als Überwachungseinrichtung bezeichnete Einrichtung zur Überwachung und/oder Diagnose einer solchen Förderanlage gemäß dem Überwachungsverfahren sowie eine Förderanlage, die zur Ausführung des Verfahrens bestimmt und eingerichtet ist.

Verfahren und korrespondierende Vorrichtungen zur Überwachung von Aufzugsanlagen und dergleichen sind an sich bekannt. In der DE 10 2011 009 362 A wird ein Verfahren zur Überwachung einer Rolltreppe beschrieben. Dabei werden aufgenommene Betriebstondaten mit normalen Tondaten verglichen. So wird ein Betriebston zum Beispiel als normal bestimmt, wenn dessen Tonvolumen in einem für den Normalzustand vorgegebenen Bereich liegt und als anormal betrachtet, wenn dieser Bereich unter- oder überschritten wird.

In der WO 2014/200457 A wird ein Verfahren zur Überwachung einer Aufzugsanlage beschrieben, das ebenfalls auf einer Erfassung von Tondaten während des Betriebs der Aufzugsanlage basiert. Dabei werden zu unterschiedlichen Zeitpunkten Tondaten aufgenommen und ein Vergleich soll Änderungen aufdecken. Erkannte zeitliche Änderungen in den Tondaten werden dabei verwendet, um vorbeugende Wartungshinweise auszugeben. Darüber hinaus sollen eventuelle Fehlersituationen auch anhand der Präsenz oder des Fehlens von Geräuschen in den jeweils aufgenommenen Tondaten erkennbar sein.

Diese Ansätze sind insofern verbesserungsfähig, als damit bestenfalls eine bestehende oder sich anbahnende Fehlersituation erkennbar ist, ohne dass sich konkrete Anhalte hinsichtlich einer jeweiligen Ursache ergeben.

In der DE 10 2011 009 362 A wird insoweit scheinbar ergänzend vorgeschlagen, Tondaten gleichzeitig in Bezug auf ein festes und ein bewegliches Teil des Förderbandes zu erfassen. Dann soll sich aufgrund eines Vergleichs der Tondaten ein Anhalt hinsichtlich einer Fehlerursache ergeben. Dabei scheint erforderlich zu sein, dass die Tondaten aufgenommen werden, wenn sich das bewegliche Teil an dem festen Teil vorbei bewegt und dass die Tondaten in diesem Moment für eine Erkennung eines Fehlers ausreichend charakteristisch sind. Diese Voraussetzungen erlauben scheinbar nur die Erkennung ganz spezieller Fehlersituationen.

In der US 2011/240414 ist ein System zur Überwachung eines Aufzugs vorgeschlagen, wobei Signale das Aufzugs, wie beispielsweise ein Schallverlauf in einer Zusammenschau mit Betriebsdaten und einem Referenzsignalverlauf des Aufzugs ausgegeben wird. Diese Daten werden bei Feststellung einer relevanten Abweichung einem Servicemitarbeiter oder einem Experten für eine Diagnose zur Verfügung gestellt.

In der US 2010/094798 ist ein ebenso ein Überwachungsverfahren zur Überwachung einer Fahrtreppe vorgeschlagen, wobei bei Vorliegen relevanter Schallunterschiede zu einem Referenz-Schallverlauf eine Frequenzanalyse durchgeführt wird und basierend auf der Frequenzanalyse ein Verursacher, wie eine Verschmutzung oder ein Streifen von Teilen angegeben werden kann.

Aus der EP 1050503 ist ein Hilfesystem für Aufzüge bekannt, bei welchem überprüft wird, inwieweit ein Aufzug einem erwarteten Modellverlauf folgt oder inwieweit mögliche hypothetische Fehler auftreten.

Diese Lösungen ermöglichen lediglich ein Erkennen genau vorbestimmter Ereignisse oder bedingen weiterhin einen grossen manuellen Aufwand in der Analyse von Daten. Eine Aufgabe der vorliegenden Erfindung besteht darin, ein Verfahren sowie eine nach dem Verfahren arbeitende Vorrichtung anzugeben, das bzw. die auf einfache Art und Weise nicht nur eine Erkennung einer bereits gegebenen oder sich anbahnenden Fehler- oder sonstigen Ausnahmesituation erlaubt, sondern auch eine ebenso Ausgabe einer potentiellen Fehlerursache ermöglicht.

Diese Aufgabe wird erfindungsgemäß mittels eines Verfahrens zur Überwachung einer Förderanlage, insbesondere einer Aufzugsanlage, mit den Merkmalen des Anspruchs 1 sowie mittels einer Vorrichtung zur Durchführung des Verfahrens mit den Merkmalen des parallelen Vorrichtungsanspruchs gelöst. Dazu ist bei dem Verfahren zur Überwachung einer Förderanlage vorgesehen, dass in Bezug auf die Förderanlage zumindest ein Signalmusterverlauf aufgenommen wird, dass in einer Datenbasis zu dem Signalmusterverlauf zumindest ein Referenzsignalverlauf gespeichert ist und dass in der Datenbasis zu dem oder jedem Referenzsignalverlauf ein Korrelationsdatensatz gespeichert ist. Der Korrelationsdatensatz umfasst Daten in Bezug auf Zeitpunkte oder Zeitabschnitte in dem Referenzsignalverlauf sowie mit jedem Zeitpunkt bzw. Zeitabschnitt verknüpfte Referenzen auf zumindest eine von der Förderanlage umfasste Funktionseinheit. Zur Überwachung der Förderanlage wird der aufgenommene Signalmusterverlauf mittels einer dafür vorgesehenen Vorrichtung mit dem Referenzsignalverlauf verglichen, zum Beispiel mittels eines dafür vorgesehenen Geräts, insbesondere einer Überwachungseinrichtung. Im Falle von Abweichungen zwischen dem Signalmusterverlauf und dem Referenzsignalverlauf wird anhand eines Zeitpunkts oder Zeitabschnitts einer solchen Abweichung mittels des jeweiligen Geräts ein passender Eintrag in dem zu dem Referenzsignalverlauf gehörigen Korrelationsdatensatz ermittelt und die dort referenzierte Funktionseinheit als Verursacher ausgegeben.

Der Korrelationsdatensatz kann beispielsweise bei einer Inbetriebnahme der Förderanlage zu der Anlage passend erstellt werden. Dazu wird beispielsweise der Referenzsignalverlauf aufgenommen und gespeichert. Im Referenzsignalverlauf werden markante Signalereignisse markiert und entsprechenden Verursachern zugeordnet. Im Korrelationsdatensatz werden die zu markanten Signalereignissen gehörenden Zeitfenster zusammen mit den Verursachern eingetragen. Zur Vereinfachung kann vom Hersteller der Förderanlage eine Standard-Korrelationstabelle bereitgestellt werden, welche eine zeitliche Abfolge von charakteristischen Signalereignissen und den entsprechenden Verursachern enthält. Bei der Inbetriebnahme kann die Standard-Korrelationstabelle angepasst werden und als Korrelationsdatensatz gespeichert werden.

Der Vorteil der Erfindung besteht darin, dass mittels des vorgeschlagenen Verfahrens nicht nur eine eventuelle vorliegende oder sich anbahnende Fehler- oder sonstige Ausnahmesituation in der Förderanlage erkannt werden kann. Vielmehr kann ebenso zusätzlich auch ein Verursacher oder ein potentieller Verursacher ausgegeben werden, so dass Wartungspersonal unmittelbar anhand einer Ausgabe des Überprüfungsverfahrens gezielt einzelne Funktionseinheiten der Förderanlage prüfen und gegebenenfalls warten oder austauschen oder für einen Austausch vorbereiten kann.

Ein weiterer Vorteil der Erfindung besteht darin, dass für eine Anwendung des Verfahrens keine oder kaum Eingriffe in die jeweilige Förderanlage notwendig sind, so dass eine entsprechende Ausrüstung der Förderanlage und auch eine Nachrüstung einfach und kostengünstig möglich sind. Das Aufnehmen von Signalmusterverläufen kann mittels in der Förderanlage angebrachter Mikrofone oder sonstiger Sensoren, zum Beispiel Vibrationssensoren, erfolgen. Typische Signalmusterverläufe sind dementsprechend Geräuschsignalverläufe oder Schallmusterverläufe, die über Mikrofone aufgenommen werden können oder Vibrationen beziehungsweise Körperschall die über Beschleunigungssensoren aufgenommen werden können. Auch Signale in der Form eines Rauschens in einem elektrischen oder elektronischen Schaltkreis können aufgenommen und analysiert werden. Die Verarbeitung eines aufgenommenen Signalmusterverlaufs, ein Vergleich mit einem gespeicherten Referenzsignalverlauf sowie ein Zugriff auf einen Korrelationsdatensatz und dort gespeicherte Daten zu potentiellen Verursachern kann mittels einer Überwachungseinrichtung in Form eines Standardcomputers erfolgen. Die Übertragung eines aufgenommenen Signalmusterverlaufs zu einem solchen Computer kann leitungsgebunden, aber auch auf leitungslosem Wege erfolgen, so dass zum Beispiel im Falle einer Nachrüstung nicht einmal eine zusätzliche Verdrahtung in der Förderanlage erforderlich ist. Als Überwachungseinrichtung kann eine zur Steuerung und/oder Überwachung der Förderanlage üblicherweise ohnehin vorhandene Steuerungseinrichtung, aber auch ein davon unabhängiges Gerät Verwendung finden. Es kommt sogar in Betracht, dass als Überwachungseinrichtung ein mobiles Gerät fungiert, das vom Wartungspersonal jeweils mitgeführt wird, zum Beispiel ein mobiles Gerät in Form eines Laptops oder in Form von zunehmend leistungsfähiger werdenden Tabletcomputern, Smartphones oder dergleichen.

Der Vergleich des Signalmusterverlaufs mit einem Referenzsignalverlauf muss des Weiteren nicht notwendig lokal am Ort der jeweiligen Förderanlage ausgeführt werden. Vielmehr kann die Auswertung auch mittels einer zum Beispiel an einem Standort des Herstellers der Förderanlage oder einem Standort eines mit der Wartung der Förderanlage betrauten Unternehmens befindlichen Vorrichtung, also zum Beispiel einem Computer, durchgeführt werden. Im Betrieb aufgenommene Signalmusterverläufe können dabei von der jeweiligen Förderanlage in elektronischer Form mit üblichen Telekommunikationsdiensten übermittelt werden, zum Beispiel als tatsächliche Tondaten über Telefonleitungen oder als Bestandteil einer Email oder dergleichen über Datenleitungen. Mittels einer solchen Vorrichtung kann eine Mehrzahl von Förderanlagen überwacht werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Überwachungsverfahrens wird der Signalmusterverlauf vorzugsweise automatisch zu vorgegebenen oder vorgebbaren Zeitpunkten aufgenommen und der Vergleich des Signalmusterverlaufs mit dem zugehörigen Referenzsignalverlauf und im Falle einer Abweichung die anschließende Ausgabe einer Funktionseinheit als Verursacher wird vorzugsweise ebenfalls automatisch und ebenfalls zu vorgegebenen oder vorgebbaren Zeitpunkten, zum Beispiel im Anschluss an die Aufnahme des Signalmusterverlaufs, synchron oder asynchron mit der Aufnahme des Signalmusterverlaufs, durchgeführt.

Der Ausdruck vorgegebene oder vorgebbare Zeitpunkte meint dabei ebenso eine feste Uhrzeit oder feste Uhrzeiten oder sich aufgrund regelmäßiger Überwachungsintervalle ergebende Zeitpunkte wie auch Zeitpunkte, die auf den Betrieb der Förderanlage bezogen sind. Bei Letzterem sind die jeweils resultierenden Zeitpunkte, zu denen die Überwachung durchgeführt wird, durch ein Ereignis oder einen Zustand der jeweiligen Förderanlage vorgegeben. Mit dem Eintreten des jeweiligen Ereignisses oder mit dem Erreichen des jeweiligen Zustands wird die Überwachung vorzugsweise automatisch ausgelöst. Als Beispiel für ein solches Ereignis kann bei einer Förderanlage in Form einer Aufzugsanlage das Betätigen eines Bedienelements oder die Erzeugung eines damit ausgelösten Startbefehls zum Ausführen einer Aufzugsfahrt dienen. Die im Anschluss an das Ereignis erfolgende Aufzugsfahrt wird dann ganz oder teilweise in Form des Signalmusterverlaufs erfasst und dieser kann schließlich im Hinblick auf einen zugehörigen Referenzsignalverlauf ausgewertet werden. Als Beispiel für einen solchen Zustand kann ein bestimmter Schaltzustand von Schaltelementen der Steuerung der Förderanlage gelten. Ausgehend von einem solchen Zustand ergibt sich aufgrund der Systemfunktionalität der Förderanlage ein notwendiger Folgezustand. Der Übergang von dem auslösenden Zustand in den Folgezustand wird dann ganz oder teilweise in Form des Signalmusterverlaufs erfasst und auch dieser kann schließlich im Hinblick auf einen zugehörigen Referenzsignalverlauf ausgewertet werden.

Der Ausdruck synchron bestimmt alternativ, dass der Vergleich und Ausgabe im Wesentlichen parallel zur Aufnahme des Signalmusterverlaufs erfolgt. Der synchrone Vergleich des Signalmusterverlaufs mit dem zugehörigen Referenzsignalverlauf und im Falle einer Abweichung die anschließende Ausgabe einer Funktionseinheit als Verursacher bedingt zwar in der Regel eine grössere Rechnerleistung, hat aber den Vorteil, dass das Vergleichsergebnis und ein Verursacher einer eventuellen Abweichung zwischen Signalmusterverlauf und Referenzsignalverlauf sehr schnell, nämlich unmittelbar nach dem Ende der Aufnahme des Signalmusterverlaufs, zur Verfügung steht.

Der Ausdruck asynchron bestimmt alternativ, dass der Vergleich und Ausgabe zeitversetzt zur Aufnahme des Signalmusterverlaufs erfolgt.

Die asynchrone Durchführung des Vergleichs des Signalmusterverlaufs mit dem zugehörigen Referenzsignalverlauf sowie im Falle einer Abweichung die anschließende Ausgabe einer Funktionseinheit als Verursacher kommt zum Beispiel dann in Betracht, wenn die Auswertung des jeweils aufgenommenen Signalmusterverlaufs zum Beispiel mittels eines von einer Wartungsfachkraft mitgeführten mobilen Geräts, wie zum Beispiel einem Laptop, Smartphone oder Tabletcomputer, erfolgt. Die Wartungsfachkraft befindet sich nicht notwendig mit dem jeweiligen mobilen Gerät permanent am Ort der jeweiligen Förderanlage, so dass ein aufgenommener Signalmusterverlauf oder aufgenommene Signalmusterverläufe zum Beispiel zunächst lokal, zum Beispiel in einem Speicher einer Steuerungseinrichtung der Förderanlage, zwischengespeichert werden und von dort zur weiteren Auswertung in einen Speicher des mobilen Geräts transferiert werden. Dies kann beispielsweise durch einen externen Abruf erfolgen, wenn das mobile Gerät an die Überwachungseinrichtung angeschlossen wird oder in einen Empfangsbereich eines mit der Überwachungseinrichtung verbundenen Senders zum leitungslosen Übertragen solcher Daten gelangt, oder wenn die Übertragung durch den Verwender des Geräts abgerufen wird. Des Weiteren kommt der externe Abruf zum Beispiel auch dann in Betracht, wenn die Auswertung des jeweils aufgenommenen Signalmusterverlaufs mittels Überwachungseinrichtung der Förderanlage, aber außerhalb üblicher Stoßzeiten bei der Benutzung der Förderanlage erfolgen soll. Darüber hinaus kommt die oben skizzierte Variante des Verfahrens auch in Betracht, wenn die Auswertung mittels einer zum Beispiel an einem Standort des Herstellers der Förderanlage oder einem Standort eines mit der Wartung der Förderanlage betrauten Unternehmens befindlichen Vorrichtung, also zum Beispiel einem Computer in einer Wartungszentrale, durchgeführt wird und dafür ein aufgenommener Signalmusterverlauf oder aufgenommene Signalmusterverläufe auf Anforderung, zum Beispiel entsprechend einem vorgegebenen oder vorgebbaren Zeitraster, und mit Mitteln der Telekommunikation übermittelt werden. Die zu dem mobilen Gerät oder dem Gerät in der Wartungszentrale übertragenen Daten umfassen entweder einen jeweils aktuell aufgenommenen Signalmusterverlauf oder einen jeweils aktuell aufgenommenen Signalmusterverlauf sowie den zugehörigen Referenzsignalverlauf und den Korrelationsdatensatz. Bei einer bevorzugten Ausführungsform ist vorgesehen, dass zumindest der Referenzsignalverlauf oder der Referenzsignalverlauf und der Korrelationsdatensatz bereits in dem jeweiligen Gerät gespeichert ist, so dass jeweils nur der aktuelle Signalmusterverlauf oder jeder seit dem letzten Abruf aufgenommene Signalmusterverlauf übertragen wird. Die Übermittlung des Signalmusterverlaufs kann alternativ zum externen Abruf auch zeitgesteuert erfolgen, wenn zu vorgegebenen Zeiten aufgenommene Signalverläufe beispielsweise an die Wartungszentrale übermittelt werden. Alternativ kann die Übermittlung des Signalmusterverlaufs auch synchron oder asynchron zur Aufnahme des Signalmusterverlaufs erfolgen. Damit kann wahlweise ein manueller oder automatischer Überwachungsablauf erfolgen.

Ein Signalmusterverlauf kann sich über die Zeit verändern. So kann beispielsweise eine Signalstärke beispielsweise ein Geräuschpegel einer bestimmten Funktionseinheit während einer Einlaufzeit der Förderanlage abnehmen. Anschliessend an diese Einlaufzeit kann diese Signalstärke über längere Zeit auf einem tiefen Niveau verharren und dann bei zunehmendem Verschleiss wieder ansteigen. Wird die Signalstärke wiederholt erfasst kann daraus eine Änderungsgeschwindigkeit als Änderung der Signalstärke einer bestimmten Funktionseinheit über einen vorbestimmten Zeitraum ermittelt werden.

Dies führt zu einer weiteren Ausführungsform des Überwachungsverfahrens. Hierbei wird zumindest ein aufgenommener Signalmusterverlauf als zusätzlicher Referenzsignalverlauf gespeichert. Beim Vergleich eines neu aufgenommenen Signalmusterverlaufs mit einer Mehrzahl von Referenzsignalverläufen, nämlich zumindest dem Referenzsignalverlauf sowie zumindest einem zusätzlichen Referenzsignalverlauf, wird sodann als Abweichung zwischen dem Signalmusterverlauf und den zumindest zwei Referenzsignalverläufen eine einen vorgegebenen oder vorgebbaren Grenzwert überschreitende Änderungsgeschwindigkeit ausgewertet. Ergänzend können die Änderungsgeschwindigkeiten, welche aus der Abweichung zwischen den mehreren Referenzsignalverläufen, natürlich unter Berücksichtigung einer zeitlichen Abfolge, resultieren miteinander verglichen werden. Die Betrachtung einer Änderungsgeschwindigkeit und vorzugsweise einer Veränderung der Änderungsgeschwindigkeit hat den Vorteil, dass auch normaler Verschleiß in einer Art und Weise berücksichtigt werden kann, dass dieser nicht unnötig zu einer Fehlermeldung führt. Optional ist ergänzend zu einer Berücksichtigung der Änderungsgeschwindigkeit bei dieser Ausführungsform des Überwachungsverfahrens die gleichzeitige Überwachung einer Überschreitung vorgegebener Grenzwerte vorgesehen, so dass bei einem dem Grenzwert entsprechenden Verschleiß sehr wohl eine Fehlermeldung ausgelöst wird. Der Grenzwert für die Änderungsgeschwindigkeit einer bestimmten Funktionseinheit kann im Korrelationsdatensatz hinterlegt sein.

Bei Ausführungsformen des Überwachungsverfahrens werden als Signalmusterverlauf ein Schallmusterverlauf oder ein zeitlicher Verlauf von Vibrationen oder Körperschall aufgenommen. Ein Signalmusterverlauf in Form eines Schallmusterverlaufs lässt sich besonders einfach mittels eines dann als Signalaufzeichnungseinrichtung fungierenden Mikrofons erfassen. Ein Signalmusterverlauf in Form aufgezeichneter Vibrationen oder Körperschall lässt sich ebenso vergleichsweise einfach mit einer entsprechenden Sensorik erfassen. In jedem Fall sind solche Sensoren oder Mikrofone leicht in und an der Förderanlage anbringbar, stören oder beeinflussen deren Betrieb nicht und sind zudem sehr preiswert und auch für eine leitungslose Weiterleitung der jeweils aufgenommenen Daten geeignet.

Die eingangs genannte Aufgabe wird ebenso mittels einer als Vorrichtung zur Durchführung des Verfahrens fungierenden Überwachungseinrichtung gelöst. Die Überwachungseinrichtung zeichnet sich dadurch aus, dass sie Mittel zur Ausführung des Verfahrens wie hier und im Folgenden beschrieben umfasst, und soweit hier oder im Folgenden der Begriff automatisch verwendet wird, ist dies so zu verstehen, dass die jeweilige Aktion durch die jeweilige Überwachungseinrichtung oder zumindest unter deren Kontrolle ausgeführt wird. Die vorgenannten Mittel sind eine Verarbeitungseinheit in Form von oder nach Art eines Prozessors, vorzugsweise eines Mikroprozessors, ein Speicher und ein in den Speicher ladbares und als Steuerungsprogramm fungierendes Computerprogramm sowie ein Vergleicher, insbesondere ein in Software und damit als Teilfunktionalität des Computerprogramms implementierter Vergleicher, zur Auswertung eines aufgenommenen Signalmusterverlaufs durch Vergleich mit zumindest einem Referenzsignalverlauf und Identifikation eines Verursachers im Falle von Abweichungen. Als Überwachungseinrichtung kann eine Steuerungseinrichtung fungieren, wie sie üblicherweise zur Steuerung der jeweiligen Förderanlage ohnehin vorgesehen ist. Die Implementation des Verfahrens und ggf. einzelner Ausführungsformen ist dann eine zusätzliche Funktionalität der Steuerungseinrichtung. Als Überwachungseinrichtung kann jedoch auch ein eigenständiges Gerät fungieren, zum Beispiel ein Gerät, das zusätzlich zur Steuerungseinrichtung am Ort der Förderanlage installiert ist oder ein mobiles Gerät oder ein Gerät am Ort einer Wartungszentrale wie oben beschrieben.

Die Erfindung ist damit einerseits auch ein Computerprogramm mit Programmcodemitteln, um alle Schritte des Verfahrens wie hier und im Folgenden beschrieben durchzuführen, wenn das Computerprogramm auf einer zur automatischen Überwachung einer Förderanlage bestimmten Überwachungseinrichtung ausgeführt wird, und andererseits ein Speichermedium mit einem derartigen Computerprogramm, also ein Computerprogrammprodukt mit Programmcodemitteln, sowie schließlich auch ein jeweils als Überwachungseinrichtung fungierendes Gerät, in dessen Speicher als Mittel zur Durchführung des Verfahrens und seiner Ausgestaltungen ein solches Computerprogramm geladen oder ladbar ist.

Die Erfindung ist schließlich auch eine Förderanlage mit zumindest einer Signalaufzeichnungseinrichtung zur Aufnahme eines Signalmusterverlaufs in Bezug auf die Förderanlage sowie mit einer Überwachungseinrichtung wie hier und im Folgenden beschrieben, wobei in einem von der Überwachungseinrichtung umfassten oder von der Überwachungseinrichtung erreichbaren Speicher ein aufgenommener Signalmusterverlauf abgespeichert oder abspeicherbar ist, wobei in einer Datenbasis zumindest ein Referenzsignalverlauf gespeichert ist, wobei in der Datenbasis zu dem oder jedem Referenzsignalverlauf ein Korrelationsdatensatz gespeichert ist, wobei der Korrelationsdatensatz Zeitpunkte oder Zeitabschnitte in dem Referenzsignalverlauf sowie mit jedem Zeitpunkt bzw. Zeitabschnitt verknüpfte Referenzen auf zumindest eine von der Förderanlage umfasste Funktionseinheit umfasst, wobei mittels der Überwachungseinrichtung, insbesondere einem von der Überwachungseinrichtung umfassten und optional in Software implementierten Vergleicher, ein Vergleich des aufgenommenen Signalmusterverlaufs mit einem zugehörigen Referenzsignalverlauf durchführbar ist und wobei im Falle von Abweichungen zwischen dem Signalmusterverlauf und dem Referenzsignalverlauf anhand eines Zeitpunkts oder Zeitabschnitts einer solchen Abweichung mittels der Verarbeitungseinheit ein passender Eintrag in dem zu dem Referenzsignalverlauf gehörigen Korrelationsdatensatz ermittelbar und eine dort referenzierte Funktionseinheit der Förderanlage als Verursacher ausgebbar ist. Die Datenbasis, die den Korrelationsdatensatz aufnimmt, kann in einer Ausführung im Speicher, der auch zur Speicherung des Signalmusterverlaufs dient, angelegt sein oder sie kann alternativ in einem eigenen Speicher angelegt sein.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Änderungen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten oder Verfahrensschrittfolgen führen.

Es zeigen
- Figur 1: eine Aufzugsanlage,
- Figur 2: einen Signalmusterverlauf, zum Beispiel einen Signalmusterverlauf in Form eines auf ein Geräusch oder eine Mehrzahl von Geräuschen zurückgehenden Schallmusterverlaufs,
- Figur 3: einen für eine qualitative oder quantitative Bewertung eines Signalmusterverlaufs zugrunde gelegten Referenzsignalverlauf,
- Figur 4: eine Datenbasis mit einer Mehrzahl von dort gespeicherten Signalmuster- und Referenzsignalverläufen,
- Figur 5: einen Vergleicher zum Vergleich eines Signalmusterverlaufs mit einem zugehörigen Referenzsignalverlauf,
- Figur 6: den Vergleicher gemäß Figur 5 mit weiteren, beispielhaften Details und
- Figur 7: die Aufzugsanlage gemäß Figur 1 mit einer mobilen Überwachungseinrichtung.

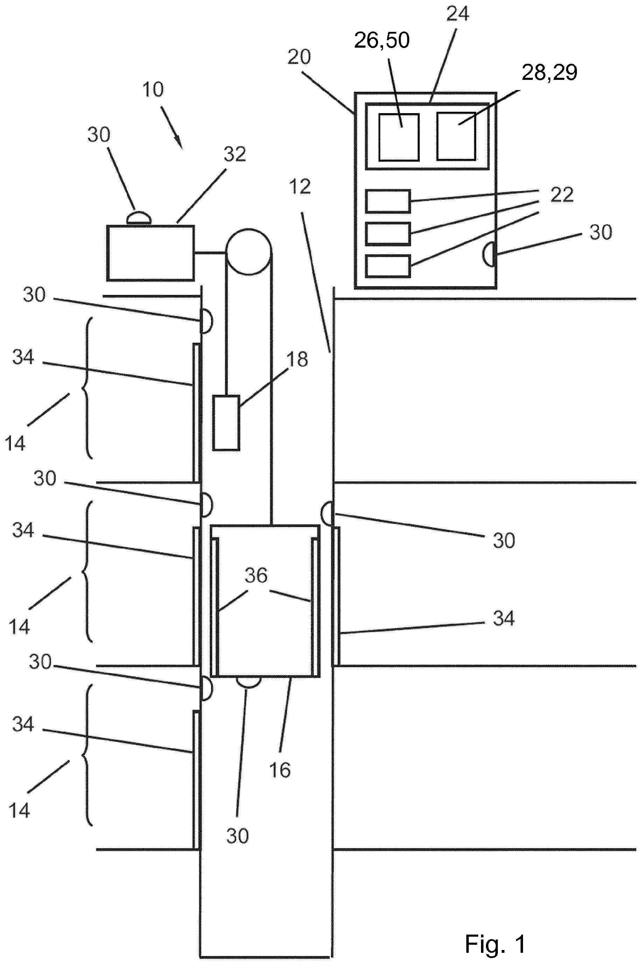

Die Darstellung in Figur 1 zeigt als Beispiel für eine Förderanlage 10 in schematisch vereinfachter Form eine grundsätzlich an sich bekannte Aufzugsanlage mit einer in einem Aufzugsschacht 12 zwischen einzelnen Stockwerken 14 oder sonstigen Haltepositionen eines Gebäudes beweglichen Aufzugskabine 16 sowie ein bei einer Bewegung der Aufzugskabine 16 mitbewegtes Gegengewicht 18. Obwohl die Aufzugsanlage in der Zeichnung mit nur einer Aufzugskabine 16 gezeigt ist, kommt die Erfindung genauso für komplexere Aufzugsanlagen mit mehreren Aufzugsschächten 12 und/oder mehreren Aufzugskabinen 16 in Betracht. Andere Beispiele für Förderanlagen 10, auf die sich die hier vorgelegte Beschreibung bezieht, sind eine Fahr- oder Rolltreppe, ein Fahrsteig oder dergleichen (nicht gezeigt).

Zur Steuerung und/oder Überwachung der Förderanlage 10 sind ein Schaltschrank 20 mit zum Beispiel Schalt- oder Antriebsschützen 22 und eine zugehörige Steuerungseinrichtung vorgesehen. Die Steuerungseinrichtung kann in an sich bekannter Art und Weise einen Mikroprozessor oder dergleichen umfassen. Die Steuereinrichtung bestimmt und steuert die Förderanlage 10. Im Schaltschrank 20 ist im Weiteren eine Überwachungseinrichtung 24 mit zumindest einem Speicher 26 und einem Prozessor 29 angeordnet. Der Speicher 26 beinhaltet eine Datenbasis 50 und der Prozessor 29 ist konfiguriert um ein Computerprogramm 28 auszuführen. Die Überwachungseinrichtung 24 mit Speicher 26 und Prozessor 29 kann allenfalls auch als Steuereinrichtung zum Steuern der Förderanlage 10 vorgesehen sein beziehungsweise die Überwachungseinrichtung 24 mit Speicher 26 und Prozessor 29 und die Steuereinrichtung zum Steuern der Förderanlage 10 können zusammengebaut sein.

Innerhalb der Förderanlage 10 ist zumindest eine Signalaufzeichnungseinrichtung 30, zum Beispiel eine Signalaufzeichnungseinrichtung 30 in Form eines Mikrofons 30, platziert. Im Interesse einer besseren Lesbarkeit der nachfolgenden Beschreibung wird diese - ohne Verzicht auf eine weitergehende Allgemeingültigkeit - anhand eines oder mehrerer Mikrofone 30 als Beispiel für Signalaufzeichnungseinrichtungen 30 allgemeiner Art fortgesetzt. Dabei ist jede Erwähnung des Begriffs "Mikrofon" als "Signalaufzeichnungseinrichtung, zum Beispiel Signalaufzeichnungseinrichtung in Form eines Mikrofons" zu lesen. Andere Beispiele für Signalaufzeichnungseinrichtungen 30 sind Sensoren, mittels derer Vibrationen oder sogenannter Körperschall eines Teil des Förderanlage 10 erfasst werden können bzw. kann. Als Teil der Förderanlage 10 werden dabei sowohl Teile der Konstruktion der Anlage 10, also zum Beispiel Stützen, Streben und dergleichen, wie auch Aggregate oder sonstige Funktionseinheiten der Anlage 10, also zum Beispiel ein Antriebsaggregat 32, eine Bremseinrichtung, ein elektrisches Gerät und dergleichen, verstanden.

Bei einer Förderanlage 10 in Form einer Aufzugsanlage kommt zum Beispiel in Betracht, ein Mikrofon 30 einem Antriebsaggregat 32 räumlich zuzuordnen. Ein weiteres Mikrofon 30 kann zum Beispiel am Boden der Aufzugskabine 16 angebracht sein. Weitere Mikrofone 30 können sogenannten Stockwerks- und Kabinentüren 34, 36 zugeordnet sein und sind diesen in dem dargestellten Beispiel zugeordnet. Alternativ oder zusätzlich kann ein nochmals weiteres Mikrofon 30 dem Schaltschrank 20 und dortigen elektromechanischen Schaltelementen, zum Beispiel den vorgenannten Antriebsschützen 22, räumlich zugeordnet sein und ist diesem bzw. diesen in dem dargestellten Beispiel zugeordnet.

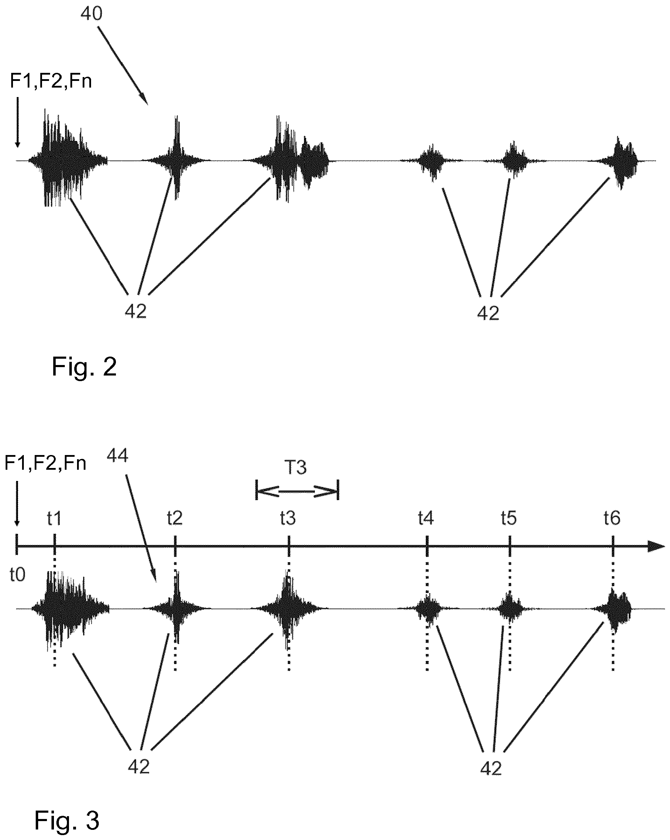

Mittels jedes Mikrofons 30 oder einer sonstigen Signalaufzeichnungseinrichtung 30 kann während des Betriebs der Förderanlage 10 ein sich beim Betrieb der Förderanlage 10 ergebendes Geräusch oder eine sich beim Betrieb der Förderanlage 10 ergebende Vibration oder dergleichen aufgenommen werden. Das aufgenommene Geräusch oder Signal wird in grundsätzlich an sich bekannter Art und Weise auf leitungslosem oder leitungsgebundenem Wege zum Beispiel innerhalb der Förderanlage 10 an die Überwachungseinrichtung 24 übertragen und dort in digitalisierter Form im Speicher 26 gespeichert. Die Überwachungseinrichtung 24 bewirkt die Ausführung des hier vorgeschlagenen Verfahrens. Die insoweit gespeicherten Daten werden im Folgenden als Schallmusterverlauf oder allgemein als Signalmusterverlauf 40 bezeichnet und die Darstellung in Figur 2 zeigt exemplarisch eine übliche Darstellung eines möglichen Schallmusterverlaufs, bei der auf der Abszisse die Zeit und auf der Ordinate der sogenannte Schalldruck abgetragen sind.

Der exemplarische Signalmusterverlauf 40 lässt diverse zeitlich aufeinander folgende Signalereignisse 42, also zum Beispiel Schallereignisse, erkennen. Ein Signalmusterverlauf 40 mit unterscheidbaren Signal- oder Schallereignissen 42 ergibt sich bei diversen Gelegenheiten beim Betrieb einer Aufzugsanlage oder jeder sonstigen Förderanlage 10, also zum Beispiel beim Öffnen und Schließen der Stockwerks- und Kabinentüren 34, 36, beim Verfahren der Aufzugskabine 16 im Aufzugsschacht 12, beim Schalten von mechanischen Schaltelementen im Schaltschrank 20, insbesondere beim Schalten von dort befindlichen Antriebsschützen 22, usw.

Jeder Signalmusterverlauf 40 wird mittels eines Mikrofons 30 oder einer sonstigen Signalaufzeichnungseinrichtung 30 zum Beispiel unter Kontrolle der Überwachungseinrichtung 24 zu vorgegebenen oder vorgebbaren Zeitpunkten Fn aufgenommen. Demnach wird zum Beispiel ein mittels eines einer Stockwerkstür 34 zugeordneten Mikrofons 30 aufgenommener Signalmusterverlauf 40 zum Beispiel spätestens ab einer ersten Bewegung F1 der Stockwerkstür 34 oder bei einer Annäherung der Aufzugskabine 16 an eine Halteposition in dem jeweiligen Stockwerk 14 ober bei einem Startbefehl F2 zum Ausführen einer Aufzugsfahrt usw. aufgenommen. Der Wesentlich ist, dass ein mittels eines bestimmten Mikrofons 30 aufgenommener Signalmusterverlauf 40 stets zu gleichen auf den Betrieb der Förderanlage 10 bezogenen Zeitpunkten F1, F2, Fn aufgenommen wird. Grundsätzlich können mittels eines Mikrofons 30 auch mehrere Signalmusterverläufe 40 zu unterschiedlichen, jeweils auf den Betrieb der Förderanlage 10 bezogenen Zeitpunkten F1, F2, Fn aufgenommen werden, dann werden die resultierenden Signalmusterverläufe 40 aber bevorzugt jeweils als eigenständige Signalmusterverläufe 40 und nicht als ein zusammengehöriger Signalmusterverlauf 40 betrachtet.

Das Aufnehmen eines Signalmusterverlaufs 40 beim Betrieb der Förderanlage 10 wird zum Beispiel automatisch durch die Überwachungseinrichtung 24 veranlasst, indem jeweils bei einem auf den Betrieb der Förderanlage 10 bezogenen Zeitpunkt F1, F2, Fn der oben genannten Art ein aktueller Signalmusterverlauf 40 aufgenommen wird. Alternativ kann auch vorgesehen sein, dass nur jedes zweite, dritte, vierte usw. Mal, wenn der auf den Betrieb der Förderanlage 10 bezogene Zeitpunkt F1, F2, Fn eintritt, das Aufnehmen eines Signalmusterverlaufs 40 ausgelöst wird. Üblicherweise erfolgt, zum Beispiel ebenfalls automatisch durch die Überwachungseinrichtung 24, im Anschluss an das Aufnehmen eines Signalmusterverlaufs 40 eine Auswertung des Signalmusterverlaufs 40 wie weiter unten beschrieben. Alternativ kann auch vorgesehen sein, dass ein aufgenommener Signalmusterverlauf 40 zunächst gespeichert und erst zu einem späteren Zeitpunkt ausgewertet wird, zum Beispiel mittels eines mobilen oder externen Geräts.

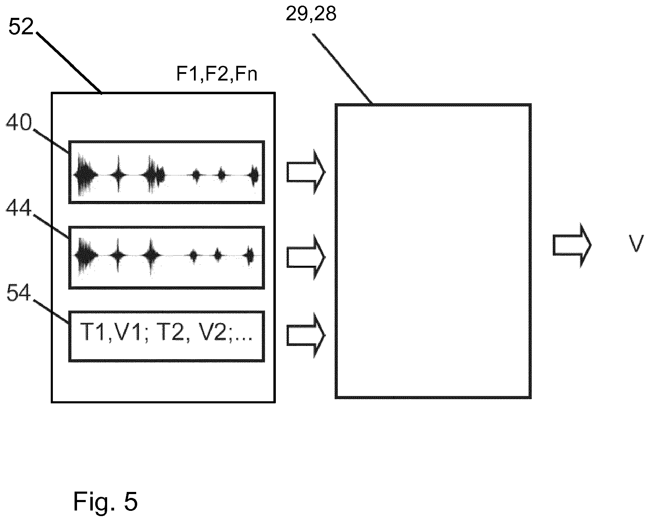

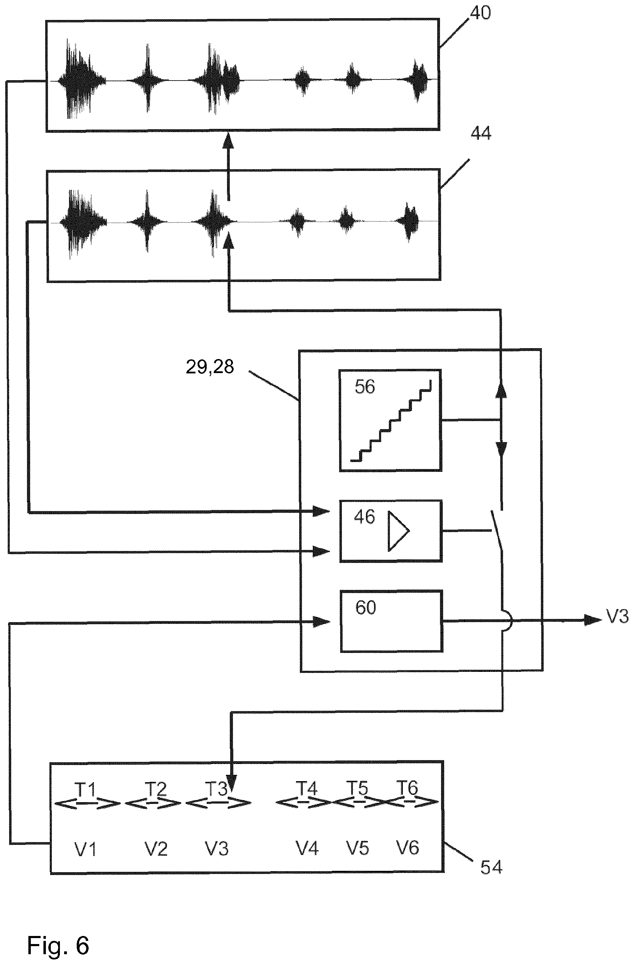

Die Darstellung in Figur 3 zeigt einen dem exemplarischen Signalmusterverlauf 40 gemäß Figur 2 zugehörigen Referenzsignalmusterverlauf (Referenzsignalverlauf) 44. Auch der Referenzsignalverlauf 44 umfasst mehrere erkennbare Signalereignisse 42. Der Referenzsignalverlauf 44 wird ebenso wie der Signalmusterverlauf 40 zu einem definierten und auf den Betrieb der Förderanlage 10 bezogenen Zeitpunkt F1, F2, Fn aufgenommen, wenn die Überwachung installiert und aktiviert wird und die Förderanlage 10 in einem einwandfreien Zustand ist. Der jeweilige Zeitpunkt gibt den Zeitpunkt vor, zu dem später im Betrieb der Förderanlage 10 ein jeweils aktueller Signalmusterverlauf 40 aufgenommen wird. Die zugrunde liegenden gleichen Startzeitpunkte F1, F2, Fn machen den Referenzsignalverlauf 44 und einen später aufgenommenen Signalmusterverlauf 40 vergleichbar. Der Referenzsignalverlauf 44 fungiert damit als Grundlage für eine Auswertung eines beim Betrieb der Förderanlage 10 aufgenommenen Signalmusterverlaufs 40. Die Auswertung erfolgt bei einer Ausführungsform der hier vorgeschlagenen Erfindung mittels der Überwachungseinrichtung 24 und mittels eines als Bestandteil des Computerprogramms 28 in den Speicher 26 geladenen und in Software implementierten Vergleichers 46 (Figur 5, Figur 6), also einem Vergleichsalgorithmus. Indem das Computerprogramm 28 mittels der jeweiligen Verarbeitungseinheit der Überwachungseinrichtung 24 oder eines anderen, entsprechenden Geräts, zum Beispiel einem mobilen Gerät 24a oder einem nicht am Ort der Förderanlage 10 befindlichen Gerät, ausgeführt wird, erfolgt der Vergleich und die nachfolgend mit weiteren Details beschriebene Auswertung eines Signalmusterverlaufs 40 automatisch mittels der jeweiligen Verarbeitungseinheit.

Jedem Signalmusterverlauf 40 ist demgemäß zumindest ein Referenzsignalverlauf 44 zugeordnet und der Referenzsignalverlauf 44 wird beim Betrieb der Förderanlage 10 mit genau demjenigen Mikrofon 30 zu dem jeweils vorgegebenen oder vorgebbaren Zeitpunkt F1, F2, Fn aufgenommen, mit dem bzw. zu dem nachfolgend beim weiteren Betrieb der Förderanlage 10 ein momentaner Signalmusterverlauf 40 aufgenommen wird.

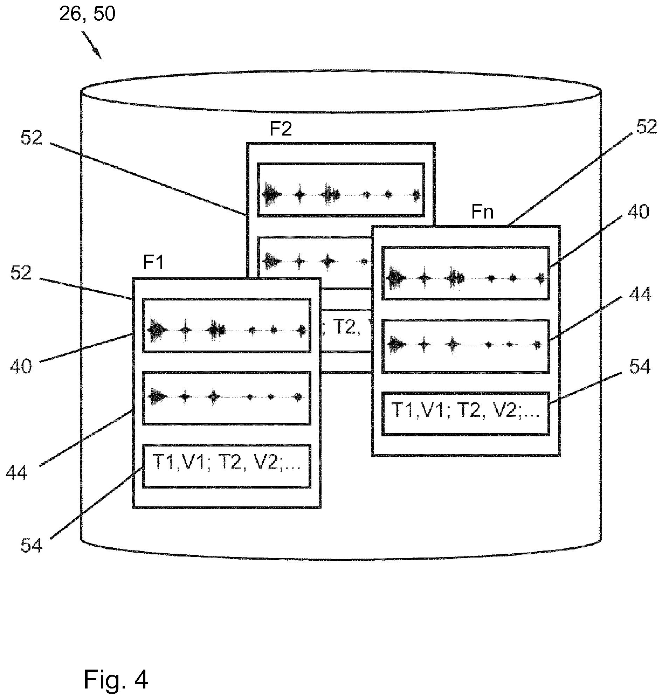

Die Darstellung in Figur 4 veranschaulicht diese Zuordnung jedes Signalmusterverlaufs 40 zu zumindest einem Referenzsignalverlauf 44 nochmals auf andere Weise. Gezeigt ist eine zum Beispiel in den Speicher 26 oder in einen für die Überwachungseinrichtung 24 in üblicher Art und Weise erreichbaren, entfernten Speicher geladene Datenbasis 50. In dieser Datenbasis 50 sind weiter ein oder mehrere Referenzsignalverläufe 44 sowie zugehörige Signalmusterverläufe 40 gespeichert und zwar in einer Art und Weise, die eine automatische Erkennung einer Zusammengehörigkeit erlaubt, zum Beispiel indem ein Referenzsignalverlauf 44 und ein zugehöriger Signalmusterverlauf 40 in einem Datensatz 52 zusammengefasst sind. Andere Möglichkeiten zur erkennbaren Zusammengehörigkeit solcher Daten sind ebenfalls denkbar, zum Beispiel eine Darstellung der Zusammengehörigkeit mittels direkter oder indirekter Referenzen, insbesondere sogenannter Zeiger, welche mit den Zeitpunkten F1, F2, Fn korrelieren.

Ein Vergleich eines aufgenommenen Signalmusterverlaufs 40 mit einem jeweils zugehörigen Referenzsignalverlauf 44, zum Beispiel mittels der Überwachungseinrichtung 24, erfolgt auf der Basis der bereits erwähnten Signalereignisse 42 sowie Zeitpunkten oder Zeitabschnitten, zu denen solche Signalereignisse 42 erwartet werden. Dafür wird nochmals auf die Darstellung in Figur 3 verwiesen. Figur 3 zeigt beispielhaft einen Referenzsignalverlauf 44 und davon umfasste und zeitlich aufeinanderfolgende Signalereignisse 42. Jedem der hier sechs Signalereignisse 42 kann - bezogen auf einen Startzeitpunkt/Startpunkt t0 der Aufzeichnung des Referenzsignalverlaufs 44 - ein Zeitpunkt F1, F2, Fn, nämlich ein Startzeitpunkt oder ein charakteristischer Zeitpunkt t1, t2, t3, t4, t5 und t6, oder eine Zeitspanne T1, T2, usw. zugeordnet werden. Die genannten Zeitpunkte t1 bis t6 sind als Beispiele für hier relevante Zeitpunkte in der Darstellung in Figur 3 zur Veranschaulichung eingetragen. Eine zusätzliche Eintragung sämtlicher Zeitspannen T1 bis T6 ist im Interesse der Übersichtlichkeit der Darstellung zugunsten der Darstellung einer Zeitspanne T3 unterblieben.

Jedes Signalereignis 42 ist mit einer oder mehreren für das Signalereignis 42 ursächlichen Funktionseinheit/-en der Förderanlage - hier und im Folgenden als Verursacher bezeichnet - verknüpft. Wenn zum Beispiel in dem Schaltschrank 20 eines der Schaltschütze 22 abfällt oder anzieht, ergibt sich ein mittels des Mikrofons 30 im Schaltschrank 20 erfassbares Geräusch/Signalereignis 42. Das Signalereignis 42 oder mehrere Signalereignisse 42 bei mehreren aufeinanderfolgenden Schaltvorgängen eines Schaltschützes 22 oder einer Gruppe von Schaltschützen 22 ist bzw. sind damit Bestandteil eines in dem Schaltschrank 20 aufgenommenen Referenzsignalverlaufs 44 und genauso eines in dem Schaltschrank 20 später aufgenommenen Signalmusterverlaufs 40. Nachdem bekannt ist, zu welchem Zeitpunkt zum Beispiel welches Schaltschütz 22 einen Schaltvorgang ausführt, kann jedes Signalereignis 42 einem Schaltschütz 22 als Verursacher und einem jeweiligen Schaltvorgang zugeordnet werden. Dass solche Zeitpunkte bekannt sind, resultiert daraus, dass die Schaltvorgänge der Schaltschütze 22 oder sonstiger Schaltelemente ursächlich für einzelne konkrete Verfahrensabläufe beim Betrieb der jeweiligen Förderanlage 10 sind und demgemäß der Reihenfolge der Schaltvorgänge der einzelnen Schaltschütze 22 eine jeweils realisierte Funktionalität der Förderanlage 10 zugrunde liegt, zum Beispiel einer Funktionalität wie das Öffnen oder Schließen von Türen 34, 36, das Anfahren der Aufzugskabine 16 nach einem Stockwerkshalt, das Abbremsen und Positionieren der Aufzugskabine 16 im Zusammenhang mit einem Stockwerkshalt, usw. Beispiele für Signalereignisse 42 außerhalb des Schaltschranks 20, also zum Beispiel Signalereignisse 42, wie sie beim Betrieb einer Aufzugsanlage an einer Kabinentür 36 einer Aufzugskabine 16 aufgenommen werden können, sind Bewegungs- und Kontaktgeräusche von mechanischen Bauteilen wie zum Beispiel der Berührungskontakt des sogenannten Schwerts einer Kabinentür 36 sowie der Riegelrollen der zugehörigen Stockwerkstür 34 beim Vorgang des Türöffnens und -schließens, Lagergeräusche des sogenannten Hakenriegels, Geräusche im Zusammenhang mit einem anschließenden Lüften oder Schließen der Türkontakte und dem anschließenden Türöffnen und -schließen mit Rollgeräuschen der Türblätter und möglichen Schleifgeräuschen der Türführungen. Die genannten Funktionseinheiten sowie weitere, nicht genannte Funktionseinheiten, die üblicherweise in einer Förderanlage 10, insbesondere einer Aufzugsanlage, verwendet werden, kommen ebenfalls als Verursacher eines Signalereignisses 42 in Betracht. Auch bei solchen Verursachern sind die Zeitpunkte und/oder Zeitabschnitte, zu denen entsprechende Signalereignisse 42 erwartet werden, aus denselben Gründen wie dies oben am Beispiel der Schaltschütze 22 erläutert wurde, grundsätzlich bekannt. Demgemäß kann in einem Referenzsignalverlauf 44 und in einem später aufgenommenen Signalmusterverlauf 40 jedes Signalereignis 42 einer Funktionseinheit/einem Verursacher oder, speziell bei zeitgleichen oder sich zeitlich überlappenden Signalereignissen 42, zumindest einer Gruppe von Funktionseinheiten/Verursachern zugeordnet werden.

Die erwähnten Zeitpunkte oder Zeitspannen sind in jeweils einem Korrelationsdatensatz 54 (Figur 4) gespeichert. Die Darstellung in Figur 4 zeigt schematisch vereinfacht solche Korrelationsdatensätze 54 als in der Datenbasis 50 gespeicherte Daten. Die von jedem Korrelationsdatensatz 54 umfassten Zeitpunkte oder Zeitabschnitte sowie die Verursacher, auf die ein zu solchen Zeitpunkten oder Zeitspannen erfasstes Signalereignis 42 zurückgeht, sind dort symbolisch als "T1, V1; T2, V2; ..." gezeigt. Jeder Korrelationsdatensatz 54 ist genau einem Datensatz 52 und dort zumindest einem Referenzsignalverlauf 44 zugeordnet und die Zeitpunkte oder Zeitabschnitte des Korrelationsdatensatzes 54 beziehen sich auf die Signalereignisse 42 des jeweiligen Referenzsignalverlaufs 44. Jeder Datensatz 52 ist somit einem Funktionsablauf zugeordnet, der beispielsweise durch einen Startzeitpunkt F1, F2, Fn identifiziert ist.

Die Darstellung in Figur 5 zeigt schematisch vereinfacht einen Prozessor 29 mit einem in Form eines insbesondere als Bestandteil des Computerprogramms 28 in Software implementierten Vergleichsalgorithmus. Das Computerprogramm 28 verarbeitet jeweils zumindest einen Referenzsignalverlauf 44, einen später aufgenommenen, zugehörigen Signalmusterverlauf 40 sowie einen zu dem Referenzsignalverlauf 44 gehörigen Korrelationsdatensatz 54. Der von dem Computerprogramm 28 durchgeführte Vergleich bezieht sich zunächst nur auf den zumindest einen jeweiligen Referenzsignalverlauf 44 und den Signalmusterverlauf 40. Zumindest dann, wenn das Computerprogramm 28 Unterschiede feststellt, erfolgt ein Zugriff auf den Korrelationsdatensatz 54, und zwar auf den Zeitpunkt oder den Zeitabschnitt, zu dem der festgestellte Unterschied gehört. Anhand des in dem Korrelationsdatensatz 54 zu jedem dort erfassten Zeitpunkt oder Zeitabschnitt gespeicherten Verursachers kann dieser als Grund für die festgestellte Abweichung zwischen dem Referenzsignalverlauf 44 und dem Signalmusterverlauf 40 ausgegeben werden (in der Darstellung auf der Ausgangsseite des Prozessors 29 als Ausgangssignal ausgegebener Verursacher V gezeigt).

Bei mehreren, einem Vergleich zugrunde gelegten Referenzsignalverläufen 44 können diese zum Beispiel durch eine Mittelwertbildung oder sonstige statistische Funktionen zusammengefasst werden. Zusätzlich oder alternativ kann aus mehreren Referenzsignalverläufen 44 ein Trend abgeleitet werden. Zusätzliche Referenzsignalverläufe 44 können sich dabei ergeben, indem ein aufgenommener Signalmusterverlauf 40 nach Abschluss von dessen Auswertung als weiterer Referenzsignalverlauf 44 in den jeweiligen Datensatz 52 aufgenommen wird. Für eine besonders belastbare Trendanalyse ist optional vorgesehen, dass jeder Signalmuster- und Referenzsignalverlauf 40, 44 mit einem Zeitstempel versehen ist und auf dieser Basis erkennbare zeitliche Abstände bei dem Vergleich und/oder der Trendanalyse zugrunde gelegt werden.

Die weitere Beschreibung wird - ohne Verzicht auf eine weitergehende Allgemeingültigkeit - am Beispiel eines Vergleichs eines Signalmusterverlaufs 40 mit einem zugrunde liegenden Referenzsignalverlauf 44 fortgesetzt.

Das Computerprogramm 28 vergleicht den Referenzsignalverlauf 44 und den Signalmusterverlauf 40 zum Beispiel im Hinblick auf eine mittlere oder maximale Amplitude eines Signalereignisses 42 und/oder im Hinblick auf eine Dauer eines Signalereignisses 42. Beim Amplitudenvergleich werden optional vorgegebene oder vorgebbare Schwellwerte zugrunde gelegt, so dass erst eine Über- oder Unterschreitung um mehr als den Schwellwert als Abweichung ausgewertet wird. Zusätzlich oder alternativ werden im Hinblick auf eine Dauer eines Signalereignisses 42 ebenfalls optional solche Schwellwerte verwendet, derart, dass erst eine Überschreitung eines Schwellwertes als Beginn und eine anschließende Unterschreitung desselben oder eines weiteren Schwellwerts als Ende des Signalereignisses 42 ausgewertet wird. Ein weiterer Schwellwert kann dahingehend angewendet werden, dass erst ab einer Überschreitung eines ersten Schwellwerts während einer durch den weiteren Schwellwert spezifizierten Dauer der Beginn eines Signalereignisses 42 erkannt wird (gleiches gilt entsprechend für die Erkennung des Endes des Signalereignisses 42). Eine weitere oder alternative Möglichkeit zum Vergleich von Referenzsignalverlauf 44 und Signalmusterverlauf 40 besteht in einer Betrachtung von jeweils in dem Signalereignis 42 enthaltenen Frequenzen. Auch hier können in der oben beschriebenen Art Schwellwerte verwendet werden. Des Weiteren können statistische Größen wie zum Beispiel Mittelwerte, zum Beispiel Amplitudenmittelwerte oder Frequenzmittelwerte, Standardabweichungen usw. bei der vergleichenden Auswertung eines Signalmusterverlaufs 40 und eines zugehörigen Referenzsignalverlaufs 44 zugrunde gelegt werden.

Die Zuordnung eines auf dieser oder einer ähnlichen Basis ermittelten Vergleichsergebnisses, insbesondere einer erkannten Abweichung, zu einem Zeitpunkt oder Zeitabschnitt des Korrelationsdatensatzes 54 und einem dort damit verknüpften Verursacher erfolgt zum Beispiel, indem mit dem Beginn des Vergleichs durch das Computerprogramm 28 ein Zähler 56 (Figur 6) oder dergleichen gestartet wird und dieser regelmäßig inkrementiert wird, so dass sich beim Ende des Vergleichs, also beim Erreichen des Endes des Signalmusterverlaufs 40 sowie des Referenzsignalverlaufs 44, ein der Dauer der Signalverläufe 40, 44 entsprechender Zeit-/Zahlenwert ergibt. Dann kann der bei Feststellung einer Abweichung aktuelle Zählerstand für einen Zugriff auf den Korrelationsdatensatz 54 verwendet werden, so dass mittels des Zählerstands eine in dem Korrelationsdatensatz 54 spezifizierte, passende Zeitspanne T1 bis T6, also ein passender Eintrag des Korrelationsdatensatzes 54, ausgewählt wird. Der oder jeder der so ausgewählten Zeitspanne in dem Korrelationsdatensatz 54 zugeordnete Verursacher - hier symbolisch entsprechend der Anzahl der in der Darstellung in Figur 3 und Figur 4 unterscheidbaren sechs Signalereignisse 42 mit V1 bis V6 bezeichnet - wird anschließend als Verursacher der festgestellten Abweichung ausgegeben, hier als der der Zeitspanne T3 zugeordnete Verursacher V3.

Die Darstellung in Figur 6 zeigt insoweit die Situation gemäß Figur 5 mit weiteren Details. Danach beinhaltet der Prozessor 29 beziehungsweise das implementierte Computerprogramm 28 einen Vergleicher 46 und einen Zähler 56. Ein jeweils aktueller Zählerstand wird nach Art eines Index oder Cursors für den Zugriff auf die Daten des Signalmusterverlaufs 40 und des Referenzsignalverlaufs 44 verwendet. Alternativ kommt anstelle eines Zählers 56 auch jede andere Funktionalität, die einen solchen Index liefert, in Betracht.

Bei einer besonders einfachen Ausführung eines Vergleichs ergibt sich durch einen solchen Zugriff anhand des Signalmusterverlaufs 40 sowie des Referenzsignalverlaufs 44 jeweils ein Zahlenwert. Diese beiden Zahlenwerte können einem von dem Vergleicher 46 umfassten Komparator zugeführt werden. Wenn - wie dies im dargestellten Beispiel der Fall ist - der aufgrund des Signalmusterverlaufs 40 resultierende Zahlenwert den korrespondierenden Zahlenwert aufgrund des Referenzsignalverlaufs 44 überschreitet, insbesondere um mehr als einen vorgegebenen oder vorgebbaren Schwellwert überschreitet, schaltet der Vergleicher 46 gewissermaßen die Auswertung des Korrelationsdatensatz 54 scharf (in der Darstellung in Figur 6 schematisch vereinfacht in Form eines durch den Vergleicher 46 ansteuerbaren Schalters gezeigt). Mit dem jeweils aktuellen Zählerstand erfolgt ein Zugriff auf den Korrelationsdatensatz 54 und es ergibt sich dort, dass der Zählerstand in den Zeitabschnitt T3 fällt. Folglich wird der mit diesem Zeitabschnitt assoziierte Verursacher, hier symbolisch mit V3 bezeichnet, ausgewählt und als Ausgangssignal ausgegeben. Zur Verarbeitung der auf diese Weise aus dem Korrelationsdatensatz 54 ausgewählten Daten, nämlich der Daten zu dort jeweils referenzierten Verursachern V1 bis V6, kann das Computerprogramm 28 eine Konvertierungseinheit 60 umfassen, die zum Beispiel eine Information, die zur Referenzierung eines Verursachers V1 bis V6 im Korrelationsdatensatz 54 infrage kommt, in einen lesbaren und verständlichen Klartext umwandelt, so dass aus einer solchen Information zum Beispiel eine Textmeldung wie "Relais Sicherheitskreis" oder "Stockwerkstür Stockwerk 3" resultiert.

Die Referenzierung eines Verursachers V1 bis V6 in dem Korrelationsdatensatz 54 erfolgt zum Beispiel mittels eines diesen eindeutig identifizierenden Zahlenwerts, einer Adresse, einer Kurzbezeichnung oder dergleichen. Selbstverständlich kann der Korrelationsdatensatz 54 auch direkt einen den jeweiligen Verursacher benennenden und/oder beschreibenden Text oder eine Referenz auf einen solchen umfassen.

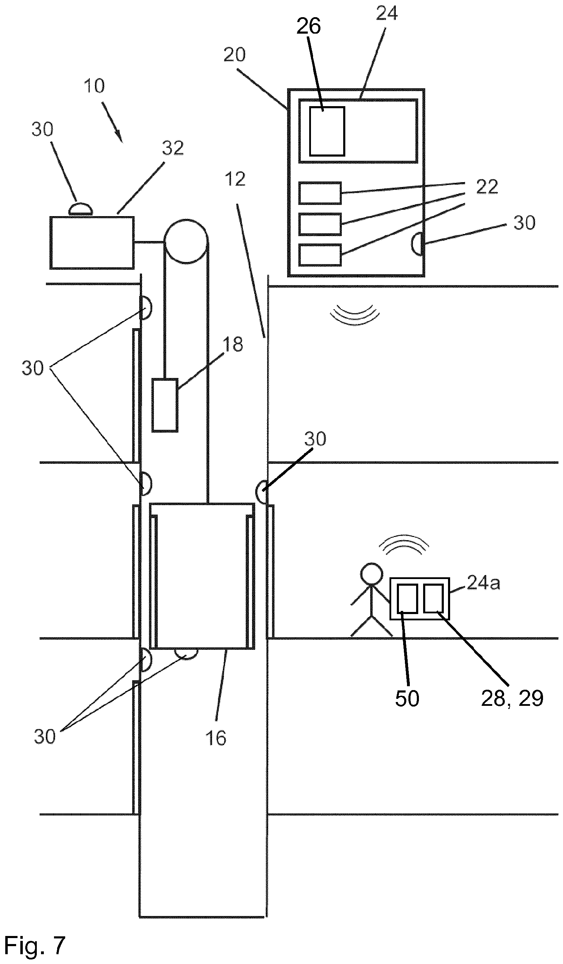

Die Darstellung in Figur 7 zeigt im Unterschied zur Ausführung gemäss Figur 1 eine Situation, bei der ein zur Ausführung der Auswertung einzelner oder mehrerer Signalmusterverläufe 40 bestimmtes und entsprechend als Überwachungseinrichtung 24a fungierendes Gerät von einem Servicetechniker oder einer Wartungsfachkraft mitgeführt wird. Bei dem Gerät handelt es sich zum Beispiel um einen Laptop, ein Smartphone, einen Tabletcomputer oder dergleichen. Eine solche mobile Überwachungseinrichtung 24a führt anstelle der Überwachungseinrichtung 24 oder zusätzlich zu der Überwachungseinrichtung 24 das hier vorgeschlagene Verfahren aus und empfängt dazu, zum Beispiel auf leitungslosem Wege, die notwendigen Daten, insbesondere einen beispielsweise im Speicher 26 zwischengespeicherten Signalmusterverlauf 40, von der Überwachungseinrichtung 24 oder von einem der Signalaufzeichnungseinrichtungen 30. Die Überwachungseinrichtung 24 beinhaltet dazu das erforderliche Computerprogramm 28 und in der gezeigten Ausführung auch die Datenbasis 50 mit den der entsprechenden Förderanlage zugeordneten Referenzsignalverläufen 44 und Korrelationsdatensätzen 54. Die Datenbasis 50 kann natürlich auch im Speicher 26 der Förderanlage abgelegt sein und dann zur Auswertung an die mobile Überwachungseinrichtung 24a übermittelt werden.

Anstelle der in der Darstellung in Figur 7 als mobiles Gerät gezeigten Überwachungseinrichtung 24a oder ergänzend zu einem solchen Gerät kann auch ein (nicht gezeigtes) Gerät, zum Beispiel ein Standardcomputer, am Ort einer Wartungszentrale als Überwachungseinrichtung 24a fungieren.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren und eine als Überwachungseinrichtung 24, 24a fungierende Vorrichtung zur Erkennung von Zustandsveränderungen von Förderanlagen 10, wie zum Beispiel Aufzugs- und Fahrtreppensystemen, mittels einer insbesondere periodischen, diskontinuierlichen Überwachung unabhängig vom Hersteller der jeweiligen Förderanlage 10 und von Erfahrungs- oder Grenzwerten, die ansonsten zur Zustandsbeurteilung der Förderanlage 10 herangezogen werden können. Dabei werden im Grundsatz das menschliche Gehör und zugehörige Erfahrungen (ein verändertes Geräusch ist ein Anhalt für einen bestehenden oder einen sich anbahnenden Defekt) nachgeahmt. Die Erfindung macht sich zunutze, dass die Systemfunktionalität einer Förderanlage 10, zum Beispiel einer Aufzugsanlage, exakt abgestimmten Abläufen unterworfen ist und dass diese mit typischen Bewegung- und Kontaktgeräuschen oder -vibrationen verbunden sind. Wenn solche Abläufe in ihrer zeitlichen Abfolge und Dauer nicht eingehalten werden, ist dies genauso wie ein sich änderndes Geräusch ein Anhalt für einen bestehenden oder einen sich anbahnenden Defekt. Solche Änderungen werden gemäß dem hier vorgeschlagenen Ansatz mittels eines Vergleichs eines Signalmusterverlaufs 40 mit einem Referenzsignalverlauf 44 erkannt und lassen sich mittels der Daten eines zugehörigen Korrelationsdatensatzes 54 einem Verursacher konkret zuordnen. Die Erfindung ist damit ein Verfahren zur Überwachung einer Förderanlage 10, eine Überwachungseinrichtung 24, 24a zur Ausführung des Verfahrens sowie eine nach dem Verfahren und mittels der Überwachungseinrichtung 24, 24a überwachte Förderanlage 10, wobei in Bezug auf die Förderanlage 10 zumindest ein Signalmusterverlauf 40 aufgenommen wird, wobei in einer Datenbasis 50 zumindest ein Referenzsignalverlauf 44 gespeichert ist, wobei in der Datenbasis 50 zu dem oder jedem Referenzsignalverlauf 44 ein Korrelationsdatensatz 54 gespeichert ist, wobei der Korrelationsdatensatz 54 Zeitpunkte oder Zeitabschnitte in dem Referenzsignalverlauf 44 sowie mit jedem Zeitpunkt bzw. Zeitabschnitt verknüpfte Referenzen auf zumindest eine von der Förderanlage 10 umfasste Funktionseinheit umfasst, wobei der aufgenommene Signalmusterverlauf 40 mittels einer Verarbeitungseinheit mit dem Referenzsignalverlauf 44 verglichen wird und wobei im Falle von Abweichungen zwischen dem Signalmusterverlauf 40 und dem Referenzsignalverlauf 44 anhand eines Zeitpunkts oder Zeitabschnitts einer solchen Abweichung mittels der Verarbeitungseinheit ein passender Eintrag in dem zu dem Referenzsignalverlauf 44 gehörigen Korrelationsdatensatz 54 ermittelt und die dort referenzierte Funktionseinheit als Verursacher ausgegeben wird.

## Patentansprüche

1. Verfahren zur Überwachung einer Förderanlage (10),
wobei in Bezug auf die Förderanlage (10) zumindest ein Signalmusterverlauf (40) aufgenommen wird,
wobei in einer Datenbasis (50) zumindest ein Referenzsignalverlauf (44) gespeichert ist,
wobei in der Datenbasis (50) zu dem oder jedem Referenzsignalverlauf (44) ein Korrelationsdatensatz (54) gespeichert ist,
wobei der Korrelationsdatensatz (54) Zeitpunkte oder Zeitabschnitte in dem Referenzsignalverlauf (44) sowie mit jedem Zeitpunkt bzw. Zeitabschnitt verknüpfte Referenzen auf zumindest eine von der Förderanlage (10) umfasste Funktionseinheit umfasst,
wobei der aufgenommene Signalmusterverlauf (40) mittels einer dafür bestimmten Vorrichtung (24, 24a) mit dem Referenzsignalverlauf (44) verglichen wird und wobei im Falle mindestens einer Abweichung zwischen dem Signalmusterverlauf (40) und dem Referenzsignalverlauf (44) anhand eines Zeitpunkts oder Zeitabschnitts der mindestens einen Abweichung mittels der Vorrichtung (24, 24a) ein passender Eintrag in dem zu dem Referenzsignalverlauf (44) gehörigen Korrelationsdatensatz (54) ermittelt und die dort referenzierte Funktionseinheit als Verursacher ausgegeben wird, **dadurch gekennzeichnet, dass**
aus dem Vergleich des aufgenommenen Signalmusterverlaufs (40) und dem Referenzsignalverlauf (44) zumindest eine Änderungsgeschwindigkeit des Signalmusterverlaufs (40) zu mindestens einem Zeitpunkt oder Zeitabschnitt des Signalmusterverlaufs (40) ermittelt wird.

2. Überwachungsverfahren nach Anspruch 1,
wobei der Signalmusterverlauf (40) zu vorgegebenen oder vorgebbaren Zeitpunkten aufgenommen wird und
wobei der Vergleich des Signalmusterverlaufs (40) mit dem Referenzsignalverlauf (44) und im Falle einer Abweichung die anschließende Ausgabe einer Funktionseinheit als Verursacher ebenfalls zu vorgegebenen oder vorgebbaren Zeitpunkten durchgeführt wird.

3. Überwachungsverfahren nach Anspruch 1,
wobei der Signalmusterverlauf (40) zu vorgegebenen oder vorgebbaren Zeitpunkten aufgenommen wird und
wobei der Vergleich des Signalmusterverlaufs (40) mit dem Referenzsignalverlauf (44) und im Falle einer Abweichung die anschließende Ausgabe einer Funktionseinheit als Verursacher synchron oder asynchron zu der Aufnahme des Signalmusterverlaufs (40) durchgeführt wird.

4. Überwachungsverfahren nach einem der Ansprüche 2 oder 3,
wobei sich die Zeitpunkte zur Aufnahme jeweils eines Signalmusterverlaufs (40) aufgrund eines Ereignisses in der Förderanlage (10), aufgrund eines Zustands der Förderanlage (10) oder aufgrund eines externen Abrufs ergeben.

5. Überwachungsverfahren nach einem der vorangehenden Ansprüche,
wobei ein aufgenommener Signalmusterverlauf (40) an ein mobiles Gerät oder an ein Gerät an einen vom Ort der Förderanlage (10) entfernten Ort übermittelt wird und das jeweilige Gerät den Vergleich mit einem Referenzsignalverlauf (44) sowie die Ermittlung einer Funktionseinheit als Verursacher anhand des jeweils zugehörigen Korrelationsdatensatzes (54) ausführt.

6. Überwachungsverfahren nach Anspruch 5,
wobei die Übermittlung des Signalmusterverlaufs (40) aufgrund eines externen Abrufs oder zeitgesteuert erfolgt.

7. Überwachungsverfahren nach Anspruch 5,
wobei die Übermittlung des Signalmusterverlaufs (40) synchron oder asynchron zu der Aufnahme des Signalmusterverlaufs (40) erfolgt.

8. Überwachungsverfahren nach Anspruch 1,
wobei zumindest ein aufgenommener Signalmusterverlauf (40) als zusätzlicher Referenzsignalverlauf (44) gespeichert wird und
wobei bei einem Vergleich eines neu aufgenommenen Signalmusterverlaufs (40) mit dem zumindest einen zusätzlichen Referenzsignalverlauf (44), zumindest eine zusätzliche Änderungsgeschwindigkeit des Signalmusterverlaufs (40) zu dem mindestens einem Zeitpunkt oder Zeitabschnitt des Signalmusterverlaufs (40) ermittelt wird.

9. Überwachungsverfahren nach einem der vorangehenden Ansprüche 1 oder 8,
wobei, die zumindest eine Änderungsgeschwindigkeit und/oder die zumindest eine zusätzliche Änderungsgeschwindigkeit in Bezug auf einen vorgegebenen oder vorgebbaren Grenzwert bewertet wird und
wobei im Falle einer Überschreitung des Grenzwerts der betroffene Zeitpunkt oder Zeitabschnitts angegeben und die im zugehörigen Korrelationsdatensatz (54) diesem Zeitpunkt oder Zeitabschnitts zugeordnete Funktionseinheit als Verursacher ausgegeben wird.

10. Überwachungsverfahren nach einem der vorangehenden Ansprüche 1, 8 oder 9, wobei die Signalstärke des Signalmusterverlaufs (40) wiederholt erfasst wird, und daraus eine Änderungsgeschwindigkeit als Änderung der Signalstärke einer bestimmten Funktionseinheit über einen vorbestimmten Zeitraum ermittelt werden.

11. Überwachungsverfahren nach einem der vorangehenden Ansprüche,
wobei als Signalmusterverlauf (40) ein Schallmusterverlauf oder ein zeitlicher Verlauf von Vibrationen oder Körperschall aufgenommen wird.

12. Überwachungseinrichtung (24, 24a) zur Ausführung des Verfahrens nach einem der vorangehenden Ansprüche beinhaltend:
- einen Speicher (26), welcher zur Speicherung eines aufgenommenen Signalmusterverlaufs (40) ausgelegt ist,
- eine Datenbasis (50), welche zur Speicherung zumindest eines Referenzsignalverlaufs (44) und eines Korrelationsdatensatzes (54) ausgelegt ist, wobei der Korrelationsdatensatz (54) Zeitpunkte oder Zeitabschnitte in dem Referenzsignalverlauf (44) sowie mit jedem Zeitpunkt bzw. Zeitabschnitt verknüpfte Referenzen auf zumindest eine von der Förderanlage (10) umfasste Funktionseinheit umfasst,
- einen Prozessor (29) mit einem Computerprogramm (28), wobei der Prozessor (29) ausgelegt ist,
> um einen Vergleich des aufgenommenen Signalmusterverlaufs (40) mit einem zugehörigen Referenzsignalverlauf (44) durchzuführen,
> um eine Abweichung zwischen dem Signalmusterverlauf (40) und dem Referenzsignalverlauf (44) festzustellen und einen Zeitpunkt oder Zeitabschnitt einer solchen Abweichung zu ermitteln,
> um im Weiteren einen passenden Eintrag auf der Basis des ermittelten Zeitpunkts oder Zeitabschnitts in dem zu dem Referenzsignalverlauf (44) gehörigen Korrelationsdatensatz (54) zu ermitteln und eine dem Eintrag entsprechende Funktionseinheit der Förderanlage (10) als Verursacher der Abweichung auszugeben, und
> **gekennzeichnet dadurch, dass** die Überwachungseinrichtung ausgelegt ist, aus dem Vergleich des aufgenommenen Signalmusterverlaufs (40) und dem Referenzsignalverlauf (44) zumindest eine Änderungsgeschwindigkeit des Signalmusterverlaufs (40) zu mindestens einem Zeitpunkt oder Zeitabschnitt des Signalmusterverlaufs (40) zu ermitteln.

13. Computerprogramm (28) mit Programmcodemitteln, um alle Schritte von zumindest einem der Ansprüche 1 bis 11 durchzuführen, wenn das Computerprogramm auf einer zur Überwachung einer Förderanlage (10) bestimmten Überwachungseinrichtung (24, 24a) ausgeführt wird.

14. Förderanlage (10) mit zumindest einer Signalaufzeichnungseinrichtung (30) zur Aufnahme eines Signalmusterverlaufs (40) in Bezug auf die Förderanlage (10) sowie einer Überwachungseinrichtung (24, 24a) nach Anspruch 12.

## Claims

1. Method for monitoring a conveying system (10),
wherein at least one signal pattern progression (40) is recorded in relation to the conveying system (10),
wherein at least one reference signal progression (44) is stored in a database (50), wherein a correlation data set (54) is stored in the database (50) for the or each reference signal progression (44),
wherein the correlation data set (54) comprises instants or time segments in the reference signal progression (44) and references to at least one functional unit comprised by the conveying system (10), which references are linked to each instant or time segment,
wherein the recorded signal pattern progression (40) is compared with the reference signal progression (44) by means of device (24, 24a) intended therefor, and wherein, in the event of at least one deviation between the signal pattern progression (40) and the reference signal progression (44), a suitable entry in the correlation data set (54) belonging to the reference signal progression (44) is determined by means of the device (24, 24a) on the basis of an instant or time segment of the at least one deviation, and the functional unit referenced there is output as a cause, **characterized in that**
at least one rate of change of the signal pattern progression (40) at at least one instant or time segment of the signal pattern progression (40) is determined from the comparison of the recorded signal pattern progression (40) and the reference signal progression (44).

2. Monitoring method according to claim 1,
wherein the signal pattern progression (40) is recorded at predetermined or predeterminable instants, and
wherein the comparison of the signal pattern progression (40) with the reference signal progression (44) and-in the event of a deviation-the subsequent outputting of a functional unit as the cause are also performed at predetermined or predeterminable instants.

3. Monitoring method according to claim 1,
wherein the signal pattern progression (40) is recorded at predetermined or predeterminable instants, and
wherein the comparison of the signal pattern progression (40) with the reference signal progression (44) and-in the event of a deviation-the subsequent outputting of a functional unit as the cause are performed synchronously or asynchronously to the recording to the signal pattern progression (40).

4. Monitoring method according to either of claims 2 or 3,
wherein the instants for recording a relevant signal pattern progression (40) arise due to an event in the conveying system (10), due to a state of the conveying system (10), or due to an external retrieval.

5. Monitoring method according to any of the preceding claims,
wherein a recorded signal pattern progression (40) is transmitted to a mobile device or to a device at a location remote from the location of the conveying system (10), and the relevant device performs the comparison with a reference signal progression (44) as well as the determination of a functional unit as the cause on the basis of the respectively associated correlation data set (54).

6. Monitoring method according to claim 5,
wherein the signal pattern progression (40) is transmitted in response to an external retrieval or in a time-controlled manner.

7. Monitoring method according to claim 5,
wherein the signal pattern progression (40) is transmitted synchronously or asynchronously to the recording of the signal pattern progression (40).

8. Monitoring method according to claim 1,
wherein at least one recorded signal pattern progression (40) is stored as an additional reference signal progression (44), and
wherein at least one additional rate of change of the signal pattern progression (40) at the at least one instant or time segment of the signal pattern progression (40) is determined in a comparison of a newly-recorded signal pattern progression (40) with the at least one additional reference signal progression (44).

9. Monitoring method according to either of preceding claims 1 or 8,
wherein the at least one rate of change and/or the at least one additional rate of change is evaluated in relation to a predetermined or predeterminable limit value, and
wherein, if the limit value is exceeded, the relevant instant or time segment is set forth and the functional unit assigned to this instant or time segment in the associated correlation data set (54) is output as the cause.

10. Monitoring method according to any of preceding claims 1, 8 or 9, wherein the signal strength of the signal pattern progression (40) is repeatedly detected and a rate of change is determined therefrom as a change in the signal strength of a specific functional unit over a predetermined period of time.

11. Monitoring method according to any of the preceding claims,
wherein a sound pattern progression or a chronological progression of vibrations or structure-borne sound is recorded as the signal pattern progression (40).

12. Monitoring device (24, 24a) for carrying out the method according to any of the preceding claims, comprising:
- a memory (26) which is designed to store a recorded signal pattern progression (40),
- a database (50) which is designed to store at least one reference signal progression (44) and a correlation data set (54),
wherein the correlation data set (54) comprises instants or time segments in the reference signal progression (44) and references to at least one functional unit comprised by the conveying system (10), which references are linked to each instant or time segment,
- a processor (29) having a computer program (28), wherein the processor (29) is designed to
> compare the recorded signal pattern progression (40) with an associated reference signal progression (44),
> identify a deviation between the signal pattern progression (40) and the reference signal progression (44), and determine an instant or time segment of such a deviation, and
> furthermore determine a suitable entry on the basis of the determined instant or time segment in the correlation data set (54) belonging to the reference signal progression (44) and output a functional unit of the conveying system (10) that corresponds to the entry as the cause of the deviation,
> **characterized in that** the monitoring device is designed to determine at least one rate of change of the signal pattern progression (40) at at least one instant or time segment of the signal pattern progression (40) from the comparison of the recorded signal pattern progression (40) and the reference signal progression (44).

13. Computer program (28) with program code means for performing all of the steps of at least one of claims 1 to 11 when the computer program is executed on a monitoring device (24, 24a) intended for monitoring a conveying system (10).

14. Conveying system (10) with at least one signal recording device (30) for recording a signal pattern progression (40) in relation to the conveying system (10), and a monitoring device (24a, 24a) according to claim 12.

## Revendications

1. Procédé de surveillance d'une installation de transport (10),
au moins une courbe de forme de signal (40) étant enregistrée en ce qui concerne l'installation de transport (10),
au moins une courbe de signal de référence (44) étant mémorisée dans une base de données (50),
un jeu de données de corrélation (54) étant mémorisé dans la base de données (50) par rapport à la ou à chaque courbe de signal de référence (44),
le jeu de données de corrélation (54) comprenant des instants ou des périodes dans la courbe de signal de référence (44) ainsi que des références, liées à chaque instant ou période, à au moins une unité fonctionnelle constituée par l'installation de transport (10),
la courbe de forme de signal (40) enregistrée étant comparée avec la courbe de signal de référence (44) au moyen d'un dispositif (24, 24a) prévu à cet effet, et une entrée adaptée étant déterminée, en cas d'au moins un écart entre la courbe de forme de signal (40) et la courbe de signal de référence (44), dans le jeu de données de corrélation (54) appartenant à la courbe de signal de référence (44), la détermination étant effectuée au moyen du dispositif (24, 24a) et sur la base d'un instant ou d'une période de l'au moins un écart, et l'unité fonctionnelle qui y est référencée étant délivrée en sortie comme cause,
**caractérisé en ce**
**qu'**au moins un taux de variation de la courbe de forme de signal (40) est déterminé à partir de la comparaison de la courbe de forme de signal (40) enregistrée avec la courbe de signal de référence (44) à au moins un instant ou une période de la courbe de forme de signal (40).

2. Procédé de surveillance selon la revendication 1,
selon lequel la courbe de forme de signal (40) est enregistrée à des instants prédéterminés ou pouvant être prédéterminés, et
selon lequel la comparaison de la courbe de forme de signal (40) avec la courbe de signal de référence (44) et, en cas d'écart, la sortie subséquente d'une unité fonctionnelle comme cause sont également effectuées à des instants prédéterminés ou pouvant être prédéterminés.

3. Procédé de surveillance selon la revendication 1,
selon lequel la courbe de forme de signal (40) est enregistrée à des instants prédéterminés ou pouvant être prédéterminés, et
selon lequel la comparaison de la courbe de forme de signal (40) avec la courbe de signal de référence (44) et, en cas d'écart, la sortie subséquente d'une unité fonctionnelle comme cause sont effectuées de façon synchrone ou asynchrone par rapport à l'enregistrement de la courbe de forme de signal (40).

4. Procédé de surveillance selon l'une des revendications 2 ou 3,
selon lequel les instants d'enregistrement d'une courbe de forme de signal (40) résultent chacun d'un événement au niveau de l'installation de transport (10), d'un état de l'installation de transport (10) ou d'une requête externe.

5. Procédé de surveillance selon l'une des revendications précédentes,
selon lequel une courbe de forme de signal (40) enregistrée est transmise à un appareil mobile ou à un appareil à un emplacement éloigné de l'emplacement de l'installation de transport (10), et selon lequel l'appareil respectif effectue la comparaison avec la courbe de signal de référence (44), et réalise la détermination d'une unité fonctionnelle comme cause sur la base du jeu de données de corrélation (54) respectivement associé.

6. Procédé de surveillance selon la revendication 5,
selon lequel la transmission de la courbe de forme de signal (40) s'effectue sur la base d'une requête externe ou de manière commandée dans le temps.

7. Procédé de surveillance selon la revendication 5,
selon lequel la transmission de la courbe de forme de signal (40) s'effectue de façon synchrone ou asynchrone par rapport à l'enregistrement de la courbe de forme de signal (40).

8. Procédé de surveillance selon la revendication 1,
selon lequel au moins une courbe de forme de signal (40) enregistrée est mémorisée comme courbe de signal de référence (44) supplémentaire, et
selon lequel, lors de la comparaison d'une courbe de forme de signal (40) nouvellement enregistrée avec l'au moins une courbe de signal de référence (44) supplémentaire, au moins un taux supplémentaire de variation de la courbe de forme de signal (40) est déterminé à l'au moins un instant ou une période de la courbe de forme de signal (40).

9. Procédé de surveillance selon l'une des revendications 1 ou 8 précédentes,
selon lequel l'au moins un taux de variation et/ou l'au moins un taux supplémentaire de variation sont évalués par rapport à une valeur limite prédéterminée ou pouvant être prédéterminée, et
selon lequel, en cas de dépassement de la valeur limite, l'instant ou la période pertinent(e) est spécifié(e), et l'unité fonctionnelle associée à cet instant ou à cette période dans le jeu de données de corrélation (54) respectif est délivrée en sortie comme cause.

10. Procédé de surveillance selon l'une des revendications 1, 8 ou 9 précédentes, selon lequel la force de signal de la courbe de forme de signal (40) est détectée de manière répétée, et un taux de variation est déterminé à partir de celle-ci comme variation de la force de signal d'une unité fonctionnelle spécifique sur une période de temps prédéterminée.

11. Procédé de surveillance selon l'une des revendications précédentes,
selon lequel une courbe de forme sonore ou une courbe temporelle de vibrations ou de bruit de structure est enregistrée comme courbe de forme de signal (40).

12. Système de surveillance (24, 24a) permettant la mise en oeuvre du procédé selon l'une des revendications précédentes, comprenant :
- une mémoire (26) conçue pour mémoriser une courbe de forme de signal (40) enregistrée,
- une base de données (50) conçue pour mémoriser au moins une courbe de signal de référence (44) et un jeu de données de corrélation (54), le jeu de données de corrélation (54) comprenant des instants ou des périodes dans la courbe de signal de référence (44) ainsi que des références, liées à chaque instant ou période, à au moins une unité fonctionnelle constituée par l'installation de transport (10),
- un processeur (29) comportant un programme informatique (28), le processeur (29) étant conçu pour
> effectuer une comparaison de la courbe de forme de signal (40) enregistrée avec une courbe de signal de référence (44) associée,
> définir un écart entre la courbe de forme de signal (40) et la courbe de signal de référence (44), et déterminer un instant ou une période d'un tel écart,
> déterminer ensuite une entrée adaptée sur la base de l'instant ou de la période déterminé(e) dans le jeu de données de corrélation (54) appartenant à la courbe de signal de référence (44), et délivrer en sortie, comme cause de l'écart, une unité fonctionnelle de l'installation de transport (10) correspondant à l'entrée,
> **caractérisé en ce que** le système de surveillance est conçu pour déterminer, à partir de la comparaison de la courbe de forme de signal (40) enregistrée avec la courbe de signal de référence (44), au moins un taux de variation de la courbe de forme de signal (40) à au moins un instant ou une période de la courbe de forme de signal (40).

13. Programme informatique (28) comportant des moyens de code de programme permettant d'effectuer toutes les étapes d'au moins l'une des revendications 1 à 11 lorsque le programme informatique est exécuté sur un système de surveillance (24, 24a) destiné à surveiller une installation de transport (10).

14. Installation de transport (10) comportant au moins un système d'enregistrement de signal (30) permettant d'enregistrer une courbe de forme de signal (40) en ce qui concerne l'installation de transport (10), et comportant un système de surveillance (24, 24a) selon la revendication 12.
